# EUROPEAN PATENT SPECIFICATION

(11) **EP 2 532 245 B1**
(45) Date of publication and mention of the grant of the patent: **25.02.2015**
(21) Application number: 11004794.1
(22) Date of filing: 10.06.2011
(51) Int. Cl.: A22C 11/02

(54) **Clipping machine**
Clipmaschine
Machine de fermeture par clip

(43) Date of publication of application: 12.12.2012
(73) Proprietor: Poly-clip System GmbH & Co. KG, 65795 Hattersheim (DE)
(72) Inventor: Reitz, Jürgen, 65760 Eschborn (DE)
(74) Representative: Eisenführ Speiser

(56) References cited:
- DE-A1- 3 608 983
- DE-A1-102004 024 419

## Description

The present invention relates to a clipping machine for producing sausage-shaped products, like sausages, according to the preamble of independent claim 1.

In particular, the present invention relates to a clipping machine for producing sausage-shaped products, like sausages, by filing a flowable filling material into a tubular or bag-shaped packaging casing and closing said packaging casing by at least one closure means, like a closure clip. The clipping machine comprises a filling tube having a central axis, for feeding the filling material in a feeding direction through an output opening into the tubular or bag-shaped packaging casing stored on the filling tube and closed at its first end, gathering means for gathering the filled tubular or bag-shaped packaging casing and for forming a plait-like portion thereto, and a clipping device having at least a first and second closing tool reversibly movable between an opened position and a closed position, for applying a closure means to the plait-like portion and closing said closure means when the closing tools are in their closed position. The clipping machine further comprises an unfolding device which is positioned on the filling tube coaxially thereto with a distance to the output opening of said filling tube.

In the practice, it is known that, for example in the production of sausage-shaped products, filling material is fed by a filling machine through a filling tube of a clipping machine into a tubular packaging casing material, which is stored on the filling tube and which is closed at its front end, i.e. the end directed to the output opening of the filling tube, by a closing clip. The tubular casing material is pulled-off from the filling tube while being filled. After a predetermined volume of filling material is filled into said tubular packaging casing material, a displacement device or gathering means, respectively with a first and a second pair of displacement elements forms a plait-like portion of the tubular packaging casing material and the clipping machine places and closes at least one closing clip at the plait-like portion forming the back end of the sausage shaped product by respective closing tools which are reversibly movable towards the plait-like portion. After that, the sausage-shaped product just produced, is separated from the remaining casing material by a knife or the like of a cutting device of the clipping machine. The produced sausage-shaped products may contain various flowable filling materials, e.g. sausage meat, grease, adhesives, sealing compounds or the like.

A clipping machine of this known type for producing sausages is disclosed in German laid open document 10 2004 024 419. The tubular packaging casing into which the filling material has to be filled is stored on the filling tube in a fan-folded manner. In order to produce sausage-shaped products of constant length, markers are positioned in regular intervals on the tubular packaging casing. Said markers which are provided as stripes surrounding the tubular casing, are detected by a respective sensor by which a casing break device is activated for preventing tubular packaging casing from being pulled-off from the filling tube, and which activates the clipping device for closing the just filled casing portion. For unfolding said tubular packaging casing stored on the filling tube, for enabling the sensor to detect said markers, an unfolding element in the form of a cylindrically shaped core is positioned on the filling tube. The outer diameter of said unfolding element corresponds to the inner diameter of the unfolded tubular packaging casing.

The tubular packaging casing for being filled with a filling material as described above is conventionally provided as a supply of said tubular packaging casing in tube-shaped portions of folded casing material, which is compressed and twisted about its longitudinal axis in order to include a maximum length of tubular packaging casing in a predetermined length of said supply. Thus, when being unfolded while pulled of from the filling tube, the tubular packaging casing also rotates about its longitudinal axis. In specific cases, markers may be provided on the tubular casing for being detected by a sensor device, which are not completely radially surrounding the tubular packaging casing, like pictures or dots. In these cases, when the tubular packaging casing is twisted while being pulled of from the filling tube, the markers are not always in a correct position for being detected by said sensor and, accordingly, the length of the sausage-shaped products may vary due to an incorrect detection of the respective marker.

German patent application 36 08 983 discloses a clipping machine according to the preamble of claim 1.

Thus, it is an object of the present invention to provide a clipping machine with which the above mentioned drawbacks can be overcome and with which markers or images being provided on the casing, can easily be detected.

Thus, it is an object of the present invention to provide a clipping machine with which the above mentioned drawbacks can be overcome and with which the production of sausage-shaped products of a constant length is enhanced.

The aforesaid object with regard to the clipping machine is achieved by the features of claim 1. Advantageous configurations of the clipping machine are described in claims 2 to 10. Claim 11 describes an unfoding device with the same characteristics of the unfolding device of claim 1. Claim 12 describes advantageous features of this unfolding device.

According to the present invention, there is provided a clipping machine for producing sausage-shaped products, like sausages, by filing a flowable filling material into a tubular or bag-shaped packaging casing and closing said packaging casing by at least one closure means, like a closure clip. The clipping machine comprises a filling tube having a central axis, for feeding the filling material in a feeding direction through an output opening into the tubular or bag-shaped packaging casing stored on the filling tube and closed at its first end, gathering means for gathering the filled tubular or bag-shaped packaging casing and for forming a plait-like portion thereto, and a clipping device having at least a first and second closing tool reversibly movable between an opened position and a closed position, for applying at least one closure means to the plait-like portion and for closing said closure means when the closing tools are in their closed position. The clipping machine further comprises an unfolding device which is positioned on the filling tube coaxially thereto with a distance to the output opening of said filling tube.The unfolding device has at least a first portion having at least an area of a cross-section of non-circular shape constant over an axial length of said area.

Moreover, the first portion of the unfolding device has at least one approximately rectangular cross-section defining an upper and a lower parallel flat surface as well as first and second parallel aligned side surfaces. The first portion of the unfolding device includes at least one groove in at least one of the side surfaces, parallel aligned to the central axis of the filling tube, for preferably accommodating a longitudinal seam of the tubular packaging casing when being unfolded. Said non-circular shaped cross-section of the first portion of the unfolding device eliminates or at least reduces the rotation of the tubular-casing along its longitudinal axis when being pulled-off from the filling tube. Thereby, the guiding and recognization of the markers provided on the tabular-casing along the sensor device for detecting said markers may be improved.

Moreover, said at least approximately rectangular cross-section of said first portion allows a constant and uniform unfolding of said tabular-casing and an improved detecting of markers provided on the tabular-casing by further reducing the tendency of the tabular-casing of twisting about its longitudinal axis when being pulled-off from the filing tube.

Tubular-casings are conventionally produced from a flat casing material sheet which is bent into a tubular-casing and which longitudinal edges are coupled to each other, e.g. by sewing or sealing, forming a seam. While guiding said longitudinally seam through said groove, a twisting of the tubular-casing when being pulled-off from the filling tube, is reliably prevented, and a marker, positioned on the tubular-casing and not completely surrounding the tubular-casing, like a single dot or a small picture, may surely be detected by a respective sensor device.

In order to prevent damaging the tubular-casing and to facilitate the unfolding of the tubular-casing, the first portion has a chamfer surrounding the outer edge of the first portion, directed upstream the output opening of the filling tube.

In an advantageous configuration, the unfolding device includes a second portion having a conical outer shape and being positioned on the filling tube in closed vicinity to the output opening of the filling tube. The dimensions of said second portion, like the outer diameter, may be adjusted to the respective dimension of the first portion, in order to assure a uniform pulling-off of the tubular-casing from the filling tube.

In a further advantageous configuration, the second portion has at least one groove arranged at its outer surface and aligned with the at least one groove of the first portion of the unfolding device for guiding the longitudinal seam of the tubular-casing there through. Thereby, any rotation of the tubular-casing, when being pulled of from the filling tube, is prevented, and sausage-shaped products of a uniform shape may be produced.

For preventing filling material from escaping between the unfolding device and the filling tube, the second portion has a circular groove arranged at its inner surface for accommodating a sealing element.

The unfolding device according to the present invention is positioned on the filling tube of a clipping machine. In one case, the unfolding device has a central opening corresponding to the outer shape of the filling tube for being shifted thereon. In order to secure the unfolding device on the filling tube, the second portion has a fixing device arranged at its inner surface for co-acting with a counter-fixing device provided at the filling tube for fixing the unfolding device at the filling tube. Naturally, the fixing device provided at the inner surface of the first portion of the unfolding device may also secure the unfolding device on the filling tube without the need of a counter-fixing device on said filling tub, e.g. by using a kind of a clamping device.

In an advantageous embodiment of the clipping machine, the conical outer surface of the second portion co-acts with a casing break device provided at the filling tube. This will lead to a more simple construction of the clipping machine and an accurate adaption of the casing break device to the exact diameter of the tubular casing to be filled.

It is further advantageous that the unfolding device includes a third portion with a circular cross-section, connecting the first and second portion of the unfolding device and defining the distance between the first and second portion. By adapting the length of the third portion and thus, the distance between the first and the second portion, an accurate positioning of the marker to be detected below the sensor may be executed. It has to be noted, that also the sensor may have an adjustment device for adjusting the sensor at a predetermined position, e.g. the centre, above the first portion of the unfolding device.

Accordingly, the axial length of third portion of the unfolding device may vary depending on the length of the sausage-shaped product to be produced.

As described above, the inventive clipping machine includes an unfolding device, which is positioned on the filling tube. Naturally, said unfolding device may also be provided as an upgrade part for being mounted to a filling tube of an existing clipping machine. In this configuration, the second portion includes a fixing device adapted to fix the unfolding device to the filling tube without the need of a counter-fixing device.

In the following, further advantages and embodiments of the inventive clipping machine are described in conjunction with the attached drawings. Thereby, the expression "left", "right", "below" and "above" are referred to the drawings in an orientation of the drawings which allows the normal reading of the reference numbers.

In the drawings:
- Fig. 1:: is a schematically view of a clipping machine according to the present invention;
- Fig. 2:: is a perspective view of the filling tube according to Fig. 1 with an embodiment of the unfolding device according to the present invention mounted thereon;
- Fig. 3:: is another perspective view of the filling tube according to Fig. 2; and
- Fig. 4:: is a schematically perspective view to the unfolding device of Figs. 2 and 3.

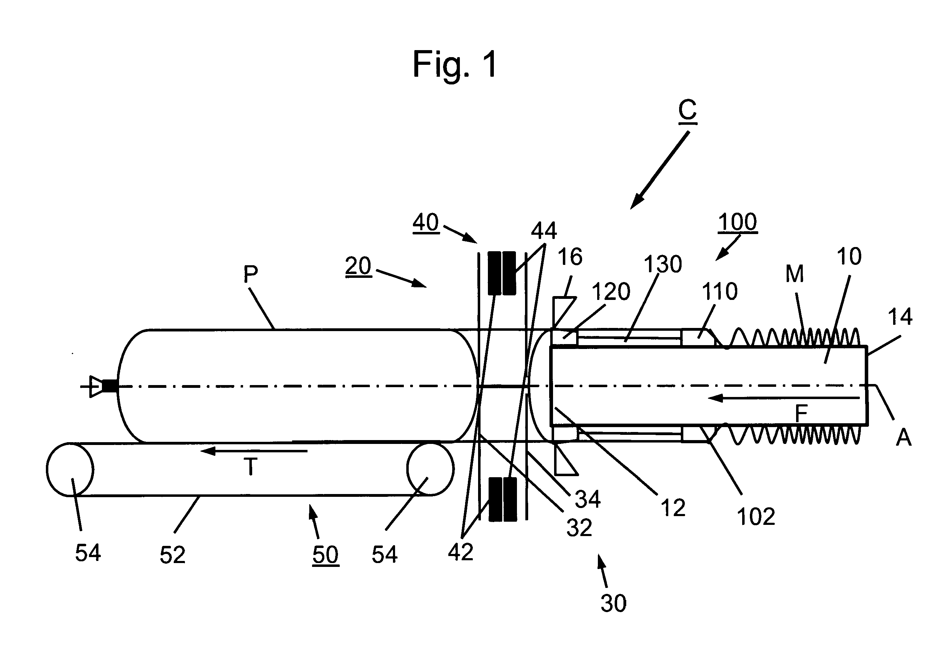

The clipping machine C for producing sausage-shaped products according to Fig. 1, comprises as main components a circular cylindrical filling tube 10 having a longitudinally extending central axis A and being made of stainless steel, wherein tubular packaging casing M made of a thin sheet material is stored on the filling tube 10, and a clipping device 20 is arranged downstream filling tube 10 for closing the filled tubular packaging casing M.

As it can be inferred from Fig. 1, horizontally arranged filling tube 10 has a left end 12 facing clipping device 20 and a right end 14 coupled to a filler arrangement (not shown in Fig. 1) including a pump for feeding filling material through filling tube 10 in a feeding direction F. A casing brake device 16 is arranged on filling tube 10 in the vicinity of left end 12 of the filling tube 10 in order to control the movement of tubular packaging casing M when pulled-off from filling tube 10 by the filling pressure.

Positioned immediately downstream left end 12 of filling tube 10, clipping device 20 is arranged and coaxially aligned to filling tube 10. Clipping device 20 comprises a displacer arrangement or gathering means 30 and a clipping arrangement 40. Gathering means 30 includes a first displacer unit 32 and a second displacer unit 34, wherein first displacer unit 32 is positioned downstream second displacer unit 34. Between first and second displacer units 32, 34, clipping arrangement 40 is positioned, including a first and a second pair of clipping tools 42, 44, wherein each pair of clipping tool includes a punch and a die.

Furthermore, for discharging sausage-shaped product P just produced from the clipping machine C, downstream clipping device 20, a transportation device or belt conveyor 50 is arranged, comprising a conveyor belt 52 and guide rollers 54. Transportation direction T of belt conveyor 50 coincides with feeding direction F. The height of the upper conveyor belt section of conveyor belt 52 is aligned to the lower side of the sausage shaped product P to be produced.

According to the present invention, an unfolding device 100 is provided to filling tube 10 of clipping machine C. Unfolding device 100 according to Fig. 1 includes a first portion 110, a second portion 120 and a third portion 130. Unfolding device 100 has a central opening or passage 102which coincides with the outer shape of filling tube 10, and which is concentrically aligned thereto. In the embodiment described in conjunction with Figs. 1 to 4, central opening 102 is a cylindrical through hole having an inner diameter corresponding to the outer diameter of filling tube 10 which has a cylindrical outer shape.

Unfolding device 100 is positioned at filling tube 10 in a manner that the left end of second portion 120 directed in the feeding direction F, is aligned with left end 12 of filling tube 10. Casing break device 16 surrounds second portion 120 and engages its outer surface which has a conical shape, for acting on tubular packaging casing M when being pulled-off from filling tube 10. First end is positioned upstream left end 12 of filling tube 10 and with a distance thereto. Third portion 130 is positioned between first and second portions 110, 120 and couples the right end of second portion 120 to the left end of the first portion 110. It has to be noted that unfolding device 100 may integrally be formed, or may be assembled of first, second and third portion 110, 120, 130, being single parts comprising respective coupling means, like screw threads or clamping means. Moreover, unfolding device 100 can be made of any suitable material wherein plastics is preferred.

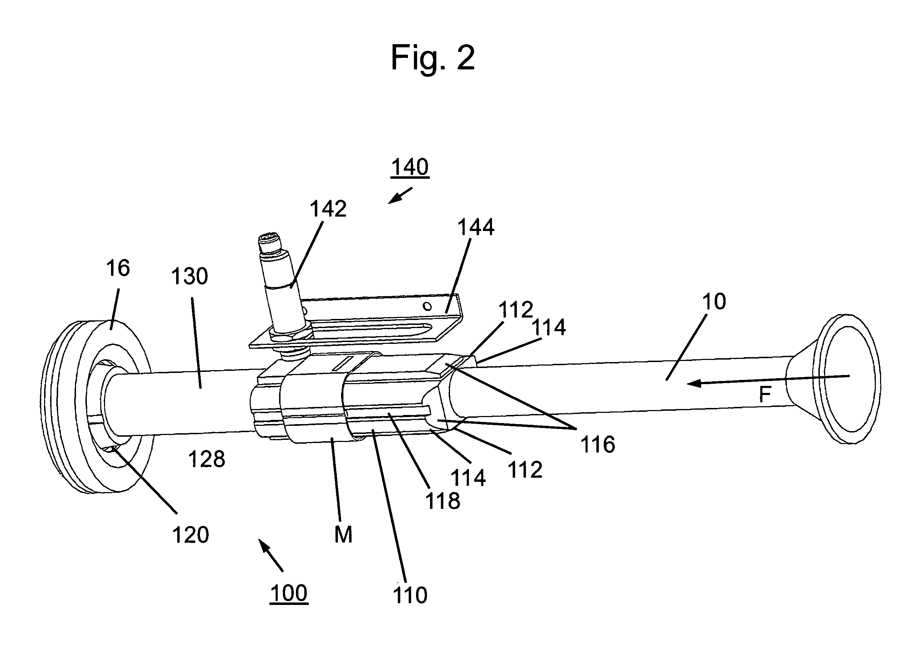

Fig. 2 shows a perspective view of the filling tube according to Fig. 1 with unfolding device 100 positioned thereon. As it can be seen in Fig. 2, first portion 110 of unfolding device 100 has an area 110a with a cross-section vertically aligned to central axis A of filling tube 10 of non-circular outer shape. According to the present embodiment, said cross-section is of an approximately rectangular shape, thereby defining an outer surface comprising two parallel upper and lower flat surfaces 112 and two parallel more rounded side surfaces 114 with longitudinally edges extending parallel to central axis A of filling tube 10.

Longitudinally extending edges of first portion 110 are rounded for preventing tubular packaging casing M from being damaged when being pulled from filling tube 10. Additionally, chamfers 116 are provided at the outer edge surrounding the right end of first portion 110 for facilitating the unfolding of tubular packaging casing M. Chamfers 116 are aligned to upper and lower surfaces 112 and side surfaces 114 and reducing the cross-section area of first portion 110 in a direction contrary to the feeding direction F.

Moreover, longitudinally grooves 118 are incorporated into side surfaces 114, extending between the left and the right end of first portion 110 and parallel to its longitudinally edges as well as parallel to each other on the same height.

A sensor device 140 is positioned above first portion 110 and directed to its upper surface 112. Sensor device 140 includes a sensor 142 which is mounted to a sensor holding device 144. Sensor holding device 144 has an adjustment member in the form of an elongated hole for adjusting the position of sensor 144 relative to first portion 110 of unfolding device 100 in a direction parallel to the feeding direction F.

In Fig. 2, a portion of tubular packaging casing M is shown in its position on first portion 110 of unfolding device 100. Tubular packaging casing M is formed from a rectangular sheet of a suitable material and formed to a tube by overlapping it's longitudinally edges. Said overlapped longitudinal edges form a seam which is guided in groove 118. Tubular packaging casing M further includes markers D which may be detected by sensor 142, when being guided along sensor 142. Tubular packaging casing M is provided with a number of markers D, which are arranged in regular intervals on tubular packaging casing M. The distance between markers D on tubular packaging casing M corresponds to the length of the sausage-shaped product P to be produced.

Also, the axial length of third portion 130 and thus, the distance between first and second portions 110, 120 of unfolding device 100 is adapted to the length of the sausage-shaped product P to be produced.

The longitudinal seam of tubular packaging casing M is guided in groove 118 of first portion 110 to assure a correct positioning of marker D below sensor 142 of sensor device 140 by preventing tubular packaging casing M from twisting when being pulled-off from filling tube 10.

As it further can be seen in Fig. 2, also second portion 120 includes at least one groove 128 positioned on its outer surface. Groove 128 is aligned to groove 118 of first portion 110 and also prevents tubular packaging casing M from twisting when being pulled-off from filling tube 10. If the first portion 110 has two parallel grooves 118, second portion 120 is also provided with two grooves 128 being aligned with the respective grooves 118 of the first portion.

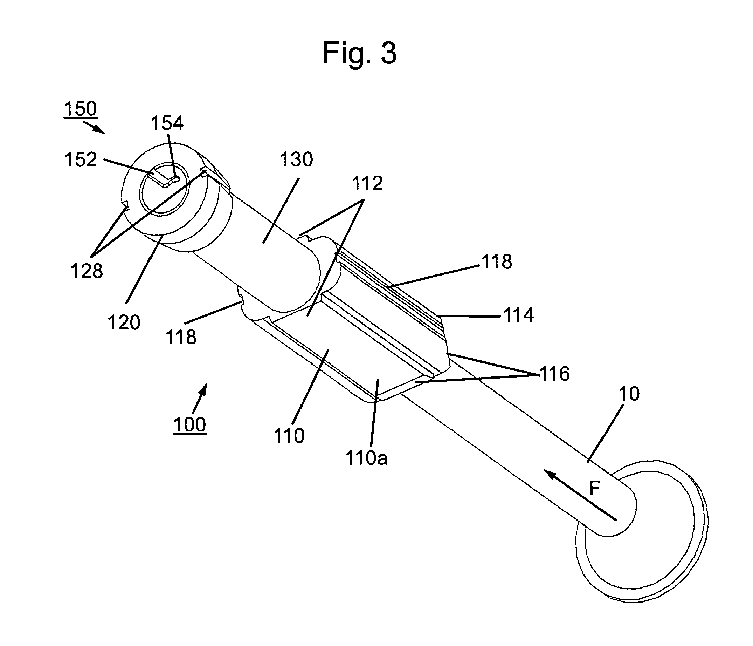

Fig. 3 is another perspective view of the filling tube 10 according to Fig. 2, including unfolding device 100 positioned on filling tube 10. As it can be seen therefrom, unfolding device 100 is secured to filling tube 10 by a fixing device 150, which in this embodiment is formed by a so called bayonet lock. Fixing device or bayonet lock 150 includes an angled slot 152 embedded in filling tube 10, and a lock pin 154 attached to second portion 120 of unfolding device 100 and engaging angled slot 152 in filling tube 10. As it further can be seen in Fig. 3, first portion 110 includes two grooves 118, one at each side surface 114 and two grooves 128 positioned opposite to each other at outer surface of second portion 120. Grooves 128 of second portion 120 are aligned to grooves 118 of first portion 110.

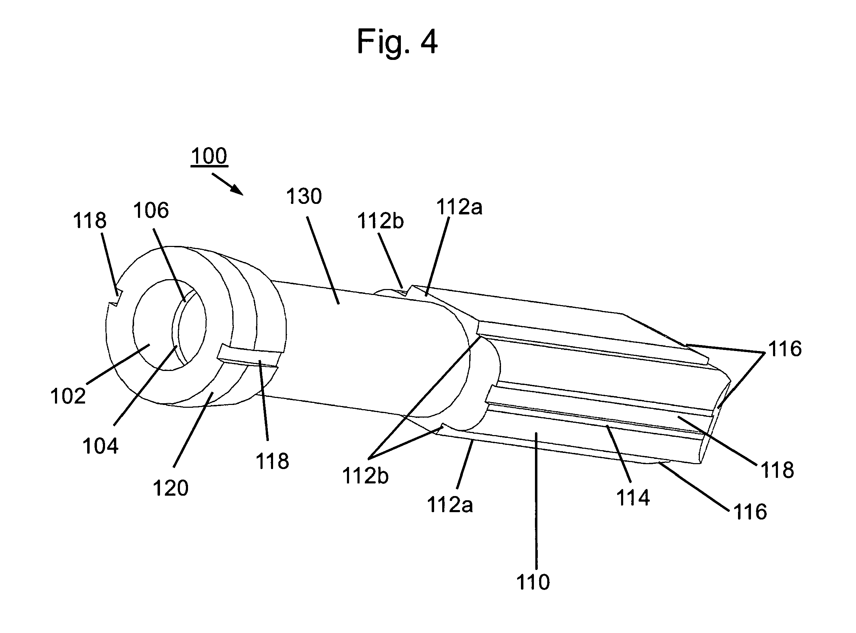

Fig. 4 shows a schematically perspective view to the unfolding device 100 of Figs. 2 and 3. As mentioned above, unfolding device 100 has a central opening 102 in the form of a cylindrical through hole of a circular cross-section which coincides with the outer shape of filling tube 10. Unfolding device 100 further comprises a circular groove 104 extending at the inner surface of second portion 120 for accommodating a sealing element 106, like a sealing ring. Said sealing element 106 prevents filling material from escaping into the space between the outer surface of filling tube 10 and inner surface of unfolding device 100 being attached to filling tube 10, while filling material is fed into tubular packaging casing M.

According to the present embodiment of unfolding device 100, first portion 110 of unfolding device 100 chamfers 116 of upper and lower surfaces 112 are formed by cuboid reinforcements 112a attached to surfaces 112 which include a chamfer at their right ends. Thereby, rectangular cutouts 112b are provided extending along the longitudinal edges of first portion 110, which divide the circumferential surface of first portion 110 into separate surfaces 112, 114, reducing the contact surface between first portion 110 and tubular casing packaging M.

Tubular packaging casing M has been described as being formed from a rectangular sheet material preferably made from textil which is formed into a tube by overlapping and sealing its longitudinal edges forming a seam. In other cases, tubular packaging casing M may be formed from two rectangular material sheets preferably made from textil placed on top of each other and overlapping their longitudinal edges. After sealing or sewing their overlapped longitudinal edges, a tubular packaging casing M is formed including two oppositely arranged longitudinal seams. Accordingly, when using this kind of tubular packaging casing M, both seams are guided in grooves 118, 128 of first and second portion 110, 120 of unfolding device 100. In this case, markers D may only provided at one of the material sheets.

For producing sausage-shaped product P, tubular packaging casing M stored on filling tube 10 is closed at one end by a closure clip and filling material is fed into said tubular packaging casing M which is thereby pulled-off from filling tube 10. After a predetermined portion of filing material is fed into tubular packaging casing M, filled tubular packaging casing M is gathered by first and second displacer units 32, 34 of gathering means 30 positioned downstream filling tube 10, which form a plait-like portion to tubular packaging casing M, which is at least approximately free from filling material. Clipping arrangement 40 positioned between first and second displacer units 32, 34, includes a first and a second pair of clipping tools 42, 44, applies two closure clips to the plait-like portion, a first in order to close the just filled tubular packaging casing M just filled, and a second in order to close the tubular packaging casing M stored on the filling tube 10.

When being pulled-of-from filling tube 10, tubular packaging casing M is guided over unfolding device 100, thereby passing first portion 110, third portion 130 and second portion 120. At first portion 110, tubular packaging casing M is unfolded since the outer circumferential length of first portion 110 corresponds to the inner circumferential length of tubular packaging casing M. When guiding tubular packaging casing M over first portion 110 and second portion 120 for the first time, i.e. when starting the production process or refilling casing material, the seam of tubular packaging casing M is inserted into grooves 118, 128 of first and second portion 110, 120. Thereby, markers D should face upwardly towards sensor 142. Thereafter, casing break device is positioned on second portion 120.

When starting feeding filling material into tubular packaging casing M, tubular packaging casing M guided with its seams in grooves 118, 128 of first and second portions 110, 120, is prevented from rotating. This assures that the markers D are positioned below sensor 142 to be surely detected.

The specific shape of first portion 110, namely the non-circular cross-section, further guarantees that the seams of tubular packaging casing M are securely retained in grooves 118 of first portion 110. It has been found that providing the grooves 118 at the side surfaces 114 which are smaller than the upper and lower surfaces 112, leads to a reliable guiding of the seams of the tubular packaging casing M through grooves 118, and avoids rotation of tubular packaging casing M when being unfolded at first portion 110 of unfolding device 100.

Unfolding device 100 has been described as being part of the inventive clipping machine C. It has to be understood that unfolding device 100 may also be provided as an upgrade part for being attached to existing clipping machines.

Naturally, unfolding device 100 may also have a through hole of other than a circular cross-section. In case that the filling tube 10 to which said unfolding device 100 has to be attached, has a cross-section of a non-circular shape, e.g. a rectangular shape, the through hole of the unfolding device 100 should also have a respective non-circular, but rectangular shape.

First portion 110 of unfolding device 100 has been described as having two parallel upper and lower flat surfaces 112. Naturally, first portion 110 may also comprise only one flat surface 112, preferably as the upper surface, for providing marker D in a defined position and shape to sensor 142.

It is also passable that first portion 110 has a non-circular cross-section different from the rectangular shape disclosed above. The cross-section of first portion 110 may be of a pentagonal or hexagonal shape, and/or may include circular segments. But, it is important at least one groove 118 is provided at side surfaces which are smaller than other surfaces.

Unfolding device 100 includes first, second and third portions 110, 120, 130. As mentioned above, the distance between first and second portions 110, 120 is adjusted by the length of third portion 130 and adapted to the length of the sausage-shaped product P to be produced. In case that sausage-shaped products P of different length have to be produced, it is possible to exchange unfolding device 100 by one of a respective different length. In this case, unfolding device 100 is formed as an integral part. Otherwise, unfolding device 100 may be formed by assembling first, second and third portions 110, 120, 130, which are provided as single parts, thereby, only third portion 130 has to be exchanged by a pert of a respective other length. It has to be understood, that, in case that the diameter of the sausage-shaped product P to be produced changes, also at least first and second portions 110, 120 has to be exchanged by parts of a respective outer circumferential dimension.

For securing unfolding device 100 on filling tube 10, a bayonet lock has been described, including an angled slot 152 in the filling tube 10 and a lock pin 154 in second portion 120. Other locking devices may be used for securing unfolding device 100 on filling tube 10, like a clamping device including clamping rings of a conical shape, or screws which are inserted in respective holes in the second portion 120 for being screw against filling tube 10.

## Claims

1. A clipping machine for producing sausage-shaped products (P), like sausages, by filing a flowable filling material into a tubular or bag-shaped packaging casing (M) and closing said packaging casing (M) by at least one closure means, like a closure clip, wherein the tubular or bag-shaped packaging casing (M) has a seam extending longitudinally, the clipping machine (C) comprises a filling tube (10) having a central axis (A), for feeding the filling material in a feeding direction (F) through an output opening (12) into the tubular or bag-shaped packaging casing (M) stored on the filling tube (10) and closed at its first end, gathering means (30) for gathering the filled tubular or bag-shaped packaging casing (M) and for forming a plait-like portion thereto, a clipping device (40) having at least a first and second closing tool (42, 44) reversibly movable between an opened position and a closed position, for applying at least one closure means to the plait-like portion and for closing said closure means when the closing tools (42, 44) are in their closed position, and an unfolding device (100) which is positioned on the filling tube (10) coaxially thereto with a distance to the output opening (12) of said filling tube (10), wherein
said unfolding device (100) has at least a first portion (110) having at least an area of a cross-section of non-circular shape constant over an axial length of said area
**characterized in that** the first portion (110) of the unfolding device (100) has at least one approximately rectangular cross-section defining an upper and a lower parallel flat surface (112) as well as first and second parallel aligned side surfaces (114), and
wherein the first portion (110) of the unfolding device (100) includes at least one groove (118) in at least one of the side surfaces (114), parallel aligned to the central axis (A) of the filling tube (10), for preferably accommodating the longitudinal seam of the tubular packaging casing (M) when being unfolded.

2. The clipping machine according to claim 1,
further comprising a sensor device (140) arranged above said flat outer surface portion (112).

3. The clipping machine according to claim 1 or 2,
wherein the first portion (110) has a chamfer (116) surrounding the outer edge of the first portion (110), directed upstream the output opening (12) of the filling tube (10).

4. The clipping machine according to any of claims 1 to 3,
wherein the unfolding device (100) includes a second portion (120) having a conical outer shape and being positioned on the filling tube (10) in closed vicinity to the output opening (12) of the filling tube (10).

5. The clipping machine according to claim 4,
wherein the second portion (120) has at least one groove (128) arranged at its outer surface and aligned with the at least one groove (118) of the first portion (110) of the unfolding device (100).

6. The clipping machine according to claims 4 or 5,
wherein the second portion (120) has a circular groove (104) arranged at its inner surface for accommodating a sealing element (106).

7. The clipping machine according to any of claims 4 to 6,
wherein the second portion (120) has a fixing device (150; 154) arranged at its inner surface for co-acting with a counter-fixing device (152) provided at the filling tube (10) for fixing the unfolding device (100) at the filling tube (10).

8. The clipping machine according to any of claims 4 to 7,
wherein the conical outer surface of the second portion (120) co-acts with a casing break device (16) provided at the filling tube (10).

9. The clipping machine according to any of claims 1 to 8,
wherein the unfolding device (100) includes a third portion (130) with a circular cross-section, connecting the first and second portion (110, 120) of the unfolding device (100) and defining the distance between the first and second portion (110, 120).

10. The clipping machine according to claim 9,
wherein the axial length of third portion (130) of the unfolding device (100) may vary depending on the length of the sausage-shaped product (P) to be produced.

11. An unfolding device for a clipping machine for producing sausage-shaped products (P), like sausages, wherein the tubular or bag-shaped packaging casing (M) has a seam extending longitudinal and wherein the clipping machine (C) comprises a filling tube (10) having a central axis (A), for feeding the filling material in a feeding direction (F) through an output opening (12) into the tubular or bag-shaped packaging casing (M) stored on the filling tube (10) and closed at its first end, wherein the unfolding device (100) is positioned on the filling tube (10) coaxially thereto with a distance to the output opening (12) of that filling tube (10), and wherein that unfolding device (100) has at least a first portion (110) having at least an area of a cross-section of non-circular shape constant over an axial length of that area,
**characterized in that** the first portion (110) of the unfolding device (100) has at least one approximately rectangular cross-section defining an upper and a lower parallel flat surface (112) as well as first and second parallel aligned side surfaces (114),
wherein the first portion (110) of the unfolding device (100) includes at least one groove (118) in at least one of the side surfaces (114), parallel aligned to the central axis (A) of the filling tube (10), for preferably accommodating the longitudinal seam of the tubular packaging casing (M) when being unfolded, and wherein the unfolding device (100) is provided as an upgrade part for being mounted to a filling tube (10) of an existing clipping machine (C).

12. The unfolding device according to claim 11, wherein the second portion (120) includes a fixing device adapted to fix the unfolding device (100) to the filling tube (10) without the need of a counter fixing device.

## Patentansprüche

1. Clipmaschine zum Herstellen wurstförmiger Produkte (P), wie Würsten, durch Füllen eines fließbaren Füllmaterials in eine rohrförmige oder beutelförmige Verpackungshülle (M) und Schließen der Verpackungshülle (M) durch wenigstens ein Verschlussmittel, wie einen Verschlussclip, wobei die rohrförmige oder beutelförmige Verpackungshülle (M) einen sich längs erstreckenden Saum hat, wobei die Clipmaschine (C) enthält: ein Füllrohr (10) mit einer Mittelachse (A) zum Zuführen des Füllmaterials in einer Zuführrichtung (F) durch eine Ausgangsöffnung (12) in die rohrförmige oder beutelförmige Verpackungshülle (M), die auf dem Füllrohr (10) gelagert und an ihrem ersten Ende verschlossen ist, Erfassungsmittel (30) zum Erfassen der gefüllten rohrförmigen oder beutelförmigen Verpackungshülle (M) und zum Bilden eines flechtartigen Abschnittes daran, eine Clipvorrichtung (40) mit wenigstens einem ersten und zweiten Schließwerkzeug (42, 44), die reversibel zwischen einer geöffneten Position und einer geschlossenen Position bewegbar sind, zum Anwenden wenigstens eines Verschlussmittels auf den flechtartigen Abschnitt und zum Schließen des Verschlussmittels, wenn die Schließwerkzeuge (42, 44) in deren geschlossener Position sind, und eine Entraffvorrichtung (100), die auf dem Füllrohr (10) koaxial dazu mit einem Abstand zu der Ausgangsöffnung (12) des Füllrohres (10) angeordnet ist,
wobei die Entraffvorrichtung (100) wenigstens einen ersten Abschnitt (110) mit wenigstens einem Bereich eines Querschnittes nicht kreisrunder Form hat, der über eine axiale Länge des Bereichs konstant ist,
**dadurch gekennzeichnet, dass** der erste Abschnitt (110) der Entraffvorrichtung (100) wenigstens einen annähernd rechteckigen Querschnitt hat, der eine obere und eine untere zueinander parallel angeordnete, flache Oberfläche (112) sowie erste und zweite parallel ausgerichtete Seitenoberflächen (114) definiert, und
wobei der erste Abschnitt (110) der Entraffvorrichtung (100) wenigstens eine Rille (118) in wenigstens einer der Seitenoberflächen (114) umfasst, die parallel mit der Mittelachse (A) des Füllrohres (10) ausgerichtet ist, um den Längssaum der rohrförmigen Verpackungshülle (M) bevorzugt zu beherbergen, wenn sie entrafft wird.

2. Clipmaschine nach Anspruch 1,
die weiter eine Sensorvorrichtung (140) aufweist, die über dem flachen Außenoberflächenabschnitt (112) angeordnet ist.

3. Clipmaschine nach Anspruch 1 oder 2,
wobei der erste Abschnitt (110) eine Fase (116) hat, die die äußere Kante des ersten Abschnitts (110) umringt und in Richtung der Ausgangsöffnung (12) des Füllrohres (10) gerichtet ist.

4. Clipmaschine nach einem der Ansprüche 1 bis 3,
wobei die Entraffvorrichtung (100) einen zweiten Abschnitt (120) umfasst, der eine konische äußere Form hat und auf dem Füllrohr (10) in unmittelbarer Nähe zu der Ausgangsöffnung (12) des Füllrohrs (10) angeordnet ist.

5. Clipmaschine nach Anspruch 4,
wobei der zweite Abschnitt (120) wenigstens eine Rille (128) hat, die an seiner äußeren Oberfläche angeordnet ist und mit der wenigstens einen Rille (118) des ersten Abschnitts (110) der Entraffvorrichtung (100) ausgerichtet ist.

6. Clipmaschine nach Anspruch 4 oder 5,
wobei der zweite Abschnitt (120) eine kreisförmige Rille (104) hat, die an seiner inneren Oberfläche zum Beherbergen eines Dichtelements (106) angeordnet ist.

7. Clipmaschine nach einem der Ansprüche 4 bis 6,
wobei der zweite Abschnitt (120) eine Fixiervorrichtung (150; 154) hat, die an seiner inneren Oberfläche eingerichtet ist, um mit einer Gegenfixiervorrichtung (152), die an dem Füllrohr (10) bereitgestellt ist, zum Fixieren der Entraffvorrichtung (100) an dem Füllrohr (10) zusammenzuwirken.

8. Clipmaschine nach einem der Ansprüche 4 bis 7,
wobei die konische äußere Oberfläche des zweiten Abschnitts (120) mit einer Hüllenbremsvorrichtung (16), die an dem Füllrohr (10) bereitgestellt ist, zusammenarbeitet.

9. Clipmaschine nach einem der Ansprüche 1 bis 8,
wobei die Entraffvorrichtung (100) einen dritten Abschnitt (130) mit einem kreisförmigen Querschnitt umfasst, der den ersten und zweiten Abschnitt (110, 120) der Entraffvorrichtung (100) verbindet und den Abstand zwischen dem ersten und zweiten Abschnitt (110, 120) definiert.

10. Clipmaschine nach Anspruch 9,
wobei die axiale Länge des dritten Abschnitts (130) der Entraffvorrichtung (100) in Abhängigkeit von der Länge des wurstförmigen Produktes (P), das zu produzieren ist, variieren kann.

11. Entraffvorrichtung für eine Clipmaschine zum Herstellen wurstförmiger Produkte (P), wie Würsten, wobei die rohrförmige oder beutelförmige Verpackungshülle (M) einen sich längs erstreckenden Saum hat und wobei die Clipmaschine (C) ein Füllrohr (10) mit einer Mittelachse (A) zum Zuführen des Füllmaterials in einer Zuführrichtung (F) durch eine Ausgangsöffnung (12) in die rohrförmige oder beutelförmige Verpackungshülle (M), die auf dem Füllrohr (10) gelagert und an ihrem ersten Ende verschlossen ist, aufweist, wobei die Entraffvorrichtung (100) auf dem Füllrohr (10) koaxial dazu mit einem Abstand zu der Ausgangsöffnung (12) des Füllrohres (10) positioniert ist und wobei die Entraffvorrichtung (100) wenigstens einen ersten Abschnitt (110) mit wenigstens einem Bereich eines Querschnittes nicht kreisrunder Form hat, der über eine axiale Länge des Bereiches konstant ist,
**dadurch gekennzeichnet, dass** der erste Abschnitt (110) der Entraffvorrichtung (100) wenigstens einen annähernd rechteckigen Querschnitt hat, der eine obere und eine untere parallele flache Oberfläche (112) sowie erste und zweite parallel ausgerichtete Seitenoberflächen (114) definiert,
wobei der erste Abschnitt (110) der Entraffvorrichtung (100) wenigstens eine Rille (118) in wenigstens einer der Seitenoberflächen (114) umfasst, die parallel mit der Mittelachse (A) des Füllrohres (10) ausgerichtet ist, um den Längssaum der rohrförmigen Verpackungshülle (M) bevorzugt zu beherbergen, wenn sie entrafft wird, und wobei die Entraffvorrichtung (100) als ein Erweiterungsteil zum Anbringen an ein Füllrohr (10) einer existierenden Clipmaschine (C) bereitgestellt wird.

12. Entraffvorrichtung nach Anspruch 11, wobei der zweite Abschnitt (120) eine Fixiervorrichtung aufweist, die angepasst ist, die Entraffvorrichtung (100) an das Füllrohr (10) zu fixieren, ohne eine Gegenfixiervorrichtung zu benötigen.

## Revendications

1. Machine d'agrafage pour produire des produits (P) en forme de saucisse, comme des saucisses, en embossant une matière à embosser susceptible de s'écouler dans une gaine (M) de conditionnement tubulaire ou en forme de sachet et en fermant cette gaine (M) de conditionnement par au moins un moyen de fermeture, comme une agrafe de fermeture, la gaine (M) de conditionnement tubulaire ou en forme de sachet ayant une ligne de jonction s'étendant longitudinalement, la machine (C) d'agrafage comprenant un tube (10) d'embossage ayant un axe (A) central, pour charger la matière à embosser dans un sens (F) d'avance, passant par une ouverture (12) de sortie, dans la gaine (M) de conditionnement tubulaire ou en forme de sachet, emmagasinée sur le tube (10) d'embossage et fermée à sa première extrémité, des moyens (30) de regroupement pour regrouper la gaine (M) de conditionnement tubulaire ou en forme de sac emplie et pour y former une partie analogue à une tresse, un dispositif (40) d'agrafage ayant au moins un premier et un deuxième outils (42, 44) de fermeture, mobiles réversiblement entre une position ouverture et une position fermée, pour appliquer au moins un moyen de fermeture à la partie analogue à une tresse et pour fermer les moyens de fermeture lorsque les outils (42, 44) de fermeture sont dans leur position fermée, et un dispositif (100) de dépliage qui est mis en position sur le tube (10) d'embossage, coaxialement à celui-ci, à distance de l'ouverture (12) de sortie du tube (10) d'embossage, dans laquelle
le dispositif (100) de dépliage a au moins une première partie (110) ayant au moins une zone d'une section droite de forme non circulaire constante sur une longueur axiale de la zone,
**caractérisée en ce que** la première partie (110) du dispositif (100) de dépliage a au moins une section transversale à peu près rectangulaire définissant une surface (112) plane supérieure et une surface (112) plane inférieure parallèles ainsi que des première et deuxième surfaces (114) latérales parallèles alignées et
la première partie (110) du dispositif (100) de dépliage comprend au moins une rainure (118) dans au moins l'une des surfaces (114) latérales, alignée parallèlement à l'axe (A) central du tube (10) d'embossage, pour loger de préférence la ligne de jonction longitudinale de la gaine (M) de conditionnement tubulaire lorsqu'elle est dépliée.

2. Machine d'agrafage suivant la revendication 1,
comprenant en outre un dispositif (140) de capteur disposé au dessus de la partie (112) de surface plane extérieure.

3. Machine d'agrafage suivant la revendication 1 ou 2,
**caractérisée en ce que** la première partie (110) a un chanfrein (116) entourant le bord extérieur de la première partie (110), dirigé vers l'aval de l'ouverture (12) de sortie du tube (10) d'embossage.

4. Machine d'agrafage suivant l'une quelconque des revendications 1 à 3,
dans laquelle le dispositif (100) de dépliage comprend une deuxième partie (120) ayant une forme extérieure conique et placée sur le tube (10) d'embossage, à proximité immédiate de l'ouverture (12) de sortie du tube (10) d'embossage.

5. Machine d'agrafage suivant la revendication 4,
dans laquelle la deuxième partie (120) a au moins une rainure (128) ménagée sur sa surface extérieure et alignée avec la au moins une rainure (118) de la première partie (110) du dispositif (100) de dépliage.

6. Machine d'agrafage suivant la revendication 4 ou 5,
dans laquelle la deuxième partie (120) a une rainure (104) circulaire ménagée sur sa surface intérieure pour loger un élément (106) d'étanchéité.

7. Machine d'agrafage suivant l'une quelconque des revendications 4 à 6,
dans laquelle la deuxième partie (120) a un dispositif (150; 154) de fixation, ménagé sur sa surface intérieure, pour coopérer avec un dispositif (152) de contre-fixation, prévu sur le tube (10) d'embossage, pour fixer le dispositif (100) de dépliage au tube (10) d'embossage.

8. Machine d'agrafage suivant l'une quelconque des revendications 4 à 7,
dans laquelle la surface extérieure conique de la deuxième partie (120) coopère avec un dispositif (16) de rupture de la gaine prévu sur le tube (10) d'embossage.

9. Machine d'agrafage suivant l'une quelconque des revendications 1 à 8,
dans laquelle le dispositif (100) de dépliage comprend une troisième partie (130) de section transversale circulaire, reliant la première et la deuxième parties (110, 120) du dispositif (100) de dépliage et définissant la distance entre la première et la deuxième parties (110, 120).

10. Machine d'agrafage suivant la revendication 9,
dans laquelle la longueur axiale de la troisième partie (130) du dispositif (100) de dépliage peut varier en fonction de la longueur du produit (P) en forme de saucisse à produire.

11. Dispositif de dépliage pour une machine d'agrafage de production de produits (P) en forme de saucisse, comme des saucisses, dans lequel la gaine (M) de conditionnement tubulaire en forme de sachet a une ligne de jonction s'étendant longitudinalement et la machine (C) d'agrafage comprend un tube (10) d'embossage ayant un axe (A) central, pour charger la matière à embosser, dans un sens (F) d'avance, en passant par une ouverture (12) de sortie, dans la gaine (M) de conditionnement tubulaire ou en forme de sachet, emmagasinée sur le tube (10) d'embossage et fermée à sa première extrémité, le dispositif (100) de dépliage étant mis en position sur le tube (10) d'embossage, coaxialement à celui-ci, à distance de l'ouverture (12) de sortie de ce tube (10) d'embossage, et le dispositif (100) de dépliage a au moins une première partie (110) ayant au moins une zone de section transversale de forme non circulaire constante sur une longueur axiale de cette zone,
**caractérisé en ce que** la première partie (110) du dispositif (100) de dépliage a au moins une section transversale à peu près rectangulaire définissant une surface (112) plane supérieure et une surface (112) plane inférieure parallèles ainsi que des première et deuxième surfaces (114) latérales parallèles alignées,
la première partie (110) du dispositif (100) de dépliage comprend au moins une rainure (118) dans au moins l'une des surfaces (114) latérales, alignées parallèlement à l'axe (A) central du tube (10) d'embossage, pour loger de préférence la ligne de jonction longitudinale de la gaine (M) de conditionnement tubulaire lorsqu'elle est dépliée, et le dispositif (100) de dépliage est prévu sous la forme d'une partie d'amélioration à monter sur un tube (10) d'embossage d'une machine (C) d'agrafage existante.

12. Dispositif de dépliage suivant la revendication 11, dans lequel la deuxième partie (120) comprend un dispositif de fixation propre à fixer le dispositif (100) de dépliage au tube (10) d'embossage sans avoir besoin d'un dispositif de contre-fixation.
